# EUROPEAN PATENT APPLICATION

(11) **EP 2 360 600 A1**
(43) Date of publication of application: **24.08.2011**
(21) Application number: 10176692.1
(22) Date of filing: 01.07.2004
(51) Int. Cl.: G06F 15/16, H04L 12/18, H04L 29/08

(54) **Peer-to-peer content sharing**

(30) Priority: 01.07.2003 US 612632; 17.02.2004 US 781029
(62) Divisional of application: 04777563.0
(71) Applicant: Apple Inc., Cupertino, CA 95014 (US)
(72) Inventor: Stochosky, Michael, San Francisco, CA 94110 (US)
(74) Representative: Rooney, John-Paul

(57) **Abstract**

An apparatus for sharing current or recent activity specific to a user with at least one peer, comprising: a content daemon to detect and store information about current or recent activity specific to the user from a plurality of applications used by the user for the current or recent activity; and an instant messaging module communicatively coupled to the content daemon, the instant messaging module being adapted to send an indication of the current or recent activity specific to the user to at least one peer, the current or recent activity specific to a user being related to a user logged-in to the instant messaging module and including activity detected and stored prior to the user being logged-in to the instant messaging module.

## Description

### BACKGROUND OF THE INVENTION

### FILED OF THE INVENTION

This invention pertains generally to chat networks, and more particularly, to sharing active content, identity-based activity, and related information with another peer.

### DESCRIPTION OF RELATED ART

Instant messaging has recently emerged as a powerful communications model for both business and personal communications. Instant messaging software applications such as Apple Computer's iChat™, America Online's Instant Messenger™, Microsoft Corp.'s MSN Messenger™, and others allow users to communicate instantly with other users over a peer network. These applications permit users to track other users that are currently logged in and to send them real time text messages. Users typically maintain a contact or buddy list of preferred contacts that are friends, family, co-workers, or others having common interests, etc.

However, these instant messaging applications are limited to sharing simple and direct text communications between contacts whereas computer uses are expanding beyond the conventional text-based functions. Convergence between computers and digital entertainment devices has led to computers that serve as an entertainment center to play music, watch movies, and enjoy other multimedia content. Additionally, computer users are spending more time with online activities such as playing games and conducting transactions. This content and activity, although potentially of interest to a contact, is not easily shared with those contacts.

Existing instant messaging applications limit real time content and information shared between a user and a contact to, for example, text messages, simple graphic files, and static file transfers. Significantly, current instant messaging applications do not allow users of a peer to directly and easily share content active on a user's computer or other activities of a user on the Internet. Active desktop content and web-based activities of a contact are not communicated in conjunction with current applications. Active content, as used herein, includes files that a user is currently accessing, such as music files the user is currently listening to, movies the user is currently watching, or the like. Identity-based activity, as used herein, includes broader activities of a particular user such as web-based auctions and transactions. Thus, if a user is listening to a music file on his computer, those contacts he may be currently instantly messaging cannot hear the same file at the same time.

At best, in order to share such files, the sender must transfer the file via a file transfer function of the instant messaging application or as an attachment to an email sent by an email application, or a user can send a URL to a file if its available on the Internet. This process is not real time sharing of active content, but is essentially copying the static file (or a reference to it) from one computer to another. Further, neither approach provides the recipient with real time updates such as a change in active content, a list of recently activated content, nor synchronization.

Furthermore, there is no network architecture to automatically enhance the recipient's use active content and/or active content information. Typically, a recipient of a static content file has to undertake additional manual steps to obtain such additional information. Again, if a user is listening to a music file, the user's instant messaging contacts, even those currently in a chat session, would not have direct access to information or meta-data such as the song's name, artist, album art, liner notes, or the like. More generally, there is no way for a user of an instant messaging application to retrieve supplemental information about the active content in use on another user's computer from a database. Similarly, such instant messaging contacts of the user cannot today easily or directly purchase or preview a copy of the content within the instant messenger.

Furthermore, there is no way to track a user's activities within the instant messaging applications. For example, contacts tell what music files he has recently listened to, such as the last file music files. Nor can users share information regarding web activities such as recent content purchases, current online auctions, previews or downloads.

Another problem with existing messenger applications is that they are typically stand-alone applications that provide only messaging functionality. However, users often multitask between several applications on a single desktop, and typically have an instant messaging application running concurrently with other applications, such as word processors, spreadsheets, graphic applications, media applications, and the like. Thus, user must toggle between the instant messaging application to communicate with their contacts and other active applications to perform tasks such as playing back multimedia or surfing web sites, and performing word processing.

Accordingly, there is a need for more robust instant messaging applications that enable active content and identity-based activity sharing. The solution should provide supplemental information about content and activities, and also related recipient transactions.

### SUMMARY OF THE INVENTION

The present invention meets these needs by allowing instant messaging applications to track and share identity-based activity and active content of a user with the user's contacts. Advantageously, the present invention provides an enhanced communication experience between a user and remote contacts that includes entertainment and online activities.

In one embodiment, a system comprises a content daemon on a sender peer to track active content of a user and identity-based activity. Active content includes files that a user is currently accessing, such as music files the user is currently listening to, movies the user is currently watching, and the like. Identity-based activity includes broader activities of a specific user, such as web-based auctions posted by or transactions conducted by a user logged-in to a chat module, and active content previously viewed by the user. The chat module shares identity-based activity with a remotely located recipient peer through a network by sending information collected by the content daemon. The recipient chat module displays identity-based activity and/or related information to the contact.

In another embodiment, the content daemon tracks user activity by, e.g., polling application modules for current active content and identity-based activity, and storing the information in a list kept by a content information database. The application module comprises a media player, a web browser, or other application for activating content and/or performing user activities. The list includes, for example, the last five audio files listened to by the user, recent downloads, an online auction or transaction conducted by the user, etc. In one embodiment, the list is populated with unique identifiers. For active content, an exemplary unique identifier is an ID3 tag for MP3s; and for identity-based activity, an exemplary unique identifier identifies a specific user's auction with *e.g.,* a URL or a key. In another embodiment, the content daemon detects identity-based activity in an application module that is in communication with an activity server. The activity server hosts online user activities such as online auctions or transactions. In response, the content daemon records the unique identifier associated with the identity-based activity.

In yet embodiment, a content enhancement server includes a content supplement database to provide supplements to identity-based activity information to the recipient peer. Supplemental information can include descriptive information about the content, meta-data, or additional information, such as name, creator, content descriptions, related files and so forth (*e.g.,* a CD containing the active media, a graphic file of the artist, a preview, or transactional information to obtain a copy). In another embodiment, the content supplement database stores previews of content for streaming to the recipient peer. The content enhancement server also includes a content transaction module to enable a transaction based on the shared content information. The content enhancement server, for example, enables a purchase a copy of a shared music file. In another embodiment, the content transaction module serves as a gateway to third-party databases with available products by using application program interfaces to search the third-party databases and generate a list of available products.

### BRIEF DESCRIPTION OF THE DRAWINGS

FIG. 1 is a block diagram illustrating a system for sharing identity-based and/or active content information according to an embodiment of the present invention.

FIG. 2 is a block diagram illustrating a peer according to one embodiment of the present invention.

FIG. 3 is a block diagram illustrating a chat module according to an embodiment of the present invention.

FIG. 4A is an illustration of a user interface displaying a recipient peer's chat module with integrated active content information according to one embodiment of the present invention.

FIG. 4B is an illustration of a user interface displaying a recipient peer's chat module with integrated identity-based activity according to one embodiment of the present invention.

FIG. 4C is an illustration of a user interface displaying a recipient peer's application module with an integrated chat module.

FIG. 5 is a block diagram illustrating the content enhancement server according to an embodiment of the present invention.

FIG. 6 is a sequence diagram illustrating a method of sharing identity-based content information according to an embodiment of the present invention.

FIG. 7 is a sequence diagram illustrating a method of completing a transaction in the content enhancement server concerning content according to an embodiment of the present invention.

FIG. 8 is a sequence diagram illustrating a method of streaming active content to the recipient peer according to an embodiment of the present invention.

FIG. 9 is a sequence diagram illustrating a method of sharing active content according to an embodiment of the present invention.

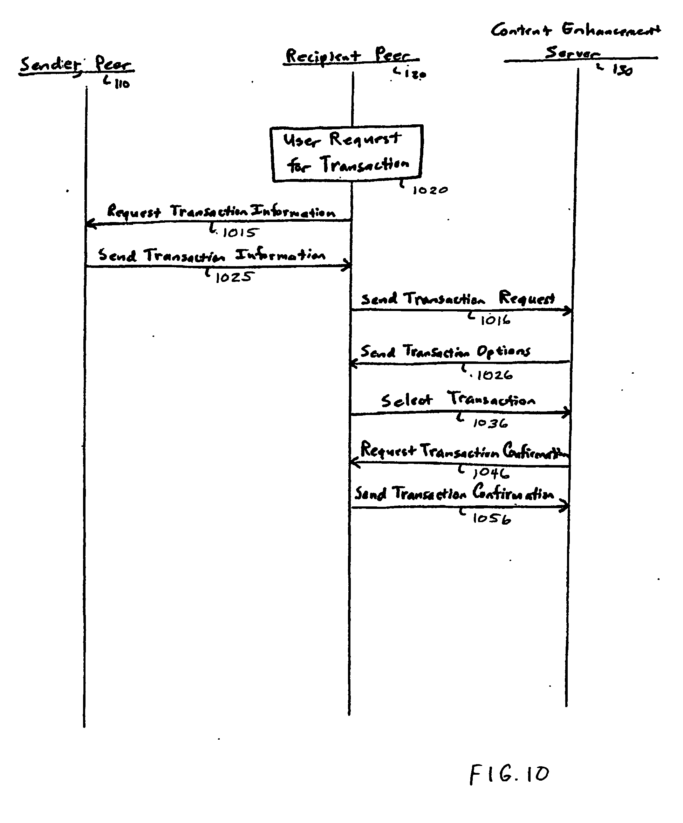

FIG. 10 is a sequence diagram illustrating a method of completing a transaction in the content enhancement server concerning shared active content according to an embodiment of the present invention.

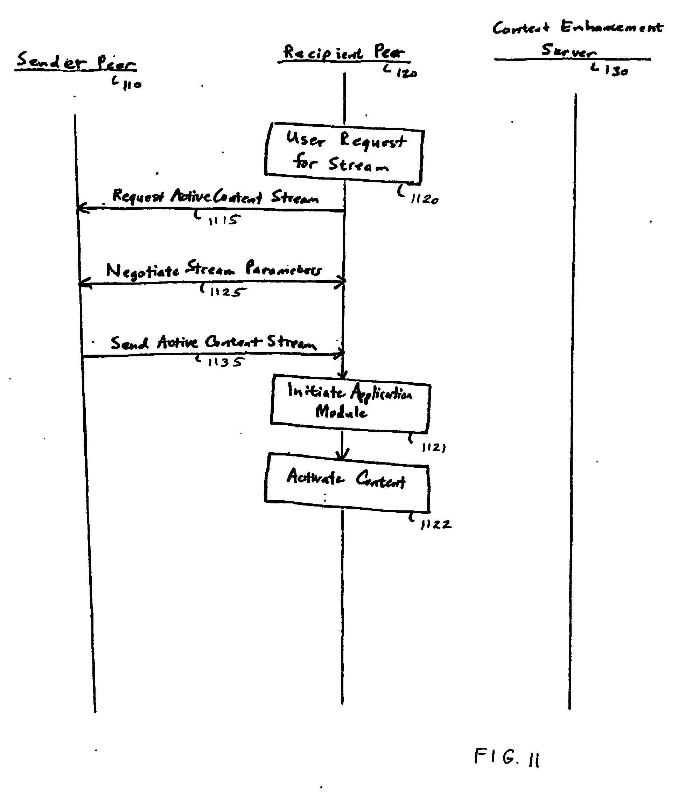

FIG. 11 is a sequence diagram illustrating a method of streaming active content between the sender peer and the recipient peer according to an embodiment of the present invention.

### DETAILED DESCRIPTION OF THE PREFERRED EMBODIMENTS

In the following description, for purposes of explanation, numerous specific details are set forth in order to provide a thorough understanding of the invention. The field of networking is such that many different variations of the illustrated and described features of the invention are possible. Those skilled in the art will undoubtedly appreciate that the invention can be practiced without some specific details described below, and indeed will see that many other variations and embodiments of the invention can be practiced while still satisfying the teachings of the invention. Further, those of skill in the art of networking appreciate the large variety of different networking protocols, topologies, transports, and the like that can be used to establish networked communications between computers. Accordingly, the present invention should not be understood as being limited to the specific implementations described below.

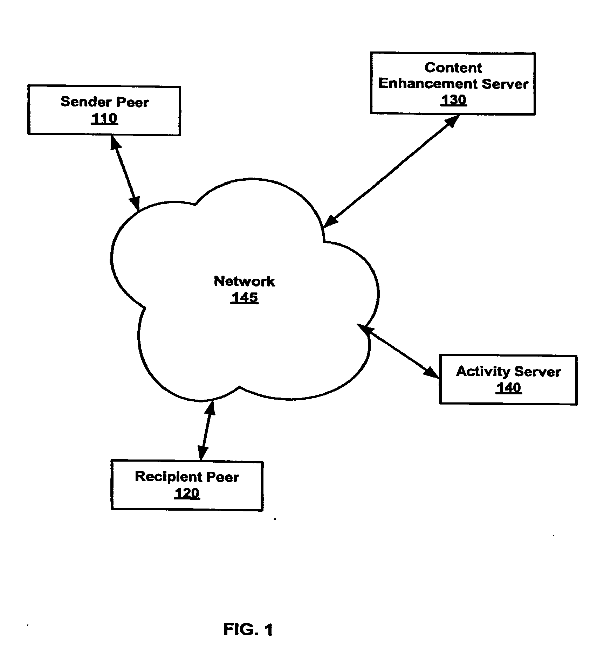

FIG. 1 is a block diagram illustrating a system 100 for sharing identity-based and/or content information according to an embodiment of the present invention. The system 100 includes a sender peer 110, a recipient peer 120, a content enhancement server 130, and an activity server 140, each communicatively coupled to a network 145. Those of skill appreciate that the designation of a peer as sending or receiving is not fixed, and that in practice a peer is sometimes sending data and sometimes receiving data; that is, the designation of a peer as sending or receiving is merely for purposes of explanation and does not limit a peer to only that function.

As discussed, active content refers to a data file in current use at a peer, such as real-time content. The data file in use may be media content such as an audio or video file being played back in a media player, text, graphics, or numeric content such as a document, spreadsheet, code file, graphics file, or any other file having data representing content that is capable of perception by a user at the peer. Active content also refers to related active content information such as meta-data about the data file (e.g., size, title, author, location, date, content list), an auxiliary data file related to the data file (e.g., unique identifier, associated graphics, text, references to other files), transaction information, a unique identifier, or any other information directly or indirectly related to the content.

Additionally, identity-based activity refers to broader activities specific to a user, such as web-based auctions or transactions conducted by the user, active content previously viewed by the user, and other events related to content accessible by other peers. Although content may be active, it need not be executing in real-time or locally (e.g., current web-based auctions or recent web purchases of a user). The content can be viewed with an application such as a web browser or other interface. Identity-based activity also refers to related information such as the duration of an auction, a URL, a unique identifier, a last update time, etc.

The sender peer 110 provides identity-based activity of contacts to a user and sends identity-based activity of the user to a contact's peer on the network 145. In general, a peer is some type of computing device (physical or virtual), such as a computer, a telephone, set top box, a network appliance, gaming console, entertainment device, or any device capable of connecting to the network 145 and receiving identity-based activity. In one embodiment, the sender peer 110 displays active content such as a multimedia file, and then sends related information to the recipient peer 120 for display. In another embodiment, the sender peer 110 sends unique identifiers of online auctions to contacts. Further embodiments of the sender peer 110 and methods operating therein are discussed below.

The recipient peer 120 receives and outputs active content and identity-based activity of contacts. The recipient peer 120 also communicates with the content enhancement server 130 to retrieve enhancements and enable transactions. The recipient peer 120 can be any embodiment of the first peer, so output may be displayed in a GUI. In one embodiment, the sender peer 110 receives and displays a contact's recent online book purchases. In another embodiment, the sender peer 110 displays online sales conducted by contacts, and subsequently receives updates from the activity server 140.

In another embodiment, the recipient peer 120 is a thin version of the sender peer 110 in that it has the capability to receive active content, but not necessarily the capability to activate the stream of the active content. For example, a telephone having the chat module (e.g., an SMS compatible text messaging module) receives active content information, but may not have the multimedia player needed for local playback. Further embodiments of the recipient peer 120 and methods operating therein are discussed below.

The content enhancement server 130 provides supplemental information about active content and identity-based content to the recipient peer 120, and enables related transactions. The enhanced content server 130 is, for example, a server application residing on a network destination. The content enhancement server 130 may be part of a central peer server, or part of an independent third-party server compatible with the protocol used by peers in the system 100 such as iTunes Music Store. Further embodiments of the content enhancement server 130 and methods operating therein are discussed below.

In one example of the system 100, two users, one at the sender peer 110 and one at the recipient peer 120 exchange text messages through iChat, while the sender user also listens to MP3s with iTunes. The receiver user notices identity-based activity concerning recent MP3s played back by the sender user and turns the conversation towards those songs. The receiver user consequentially decides to preview the music, initiating a stream from the content enhancement server 130 (or the sender peer 110) to the recipient peer 120. Ultimately, the sender user purchases a copy from the iTunes Music Store.

The activity server 140 hosts web-based user activities. The activity server 140 may be a computer running an application such as an HTML or FTP server. The user activity includes web-based services such as online auctions, games, entertainment, sales, downloads, transactions, or the like. Preferably, the activity is publicly available such that any contact can access and participate in the same or similar activity. For example, a user of a recipient peer 120 who wants to order a movie recently downloaded or purchased by a contact is directed to the activity server 140 to perform the same download or purchase. In another example, a contact is directed to a current advertisement

The network 145 transports data packets containing content information between, e.g., the sender peer 110, the recipient peer 120, and the content enhancement server 130. The network 145 may be a data network, a telephone network, or any other type of network capable of transporting data. The data may be video, audio, information, or otherwise. The network 145 can be public or private, including both wired and wireless portions, send data in packets or through circuits, and use communications protocols such as IP (Internet Protocol) or ATM (Asynchronous Transfer Mechanism). Combinations of the previous and variations of network communication are within the scope of the present invention since it is transport independent.

Examples of alternative embodiments of the system 100 include, an embodiment having more than two peers, an embodiment having peers without the content enhancement server 130, and an embodiment having peers communicatively coupled through a first network 145 and one of the peers communicatively coupled to the content enhancement server 130 through a second network 145. In particular, FIG. 1 shows only two peers for illustration, but in actual practice, there will large number of peers.

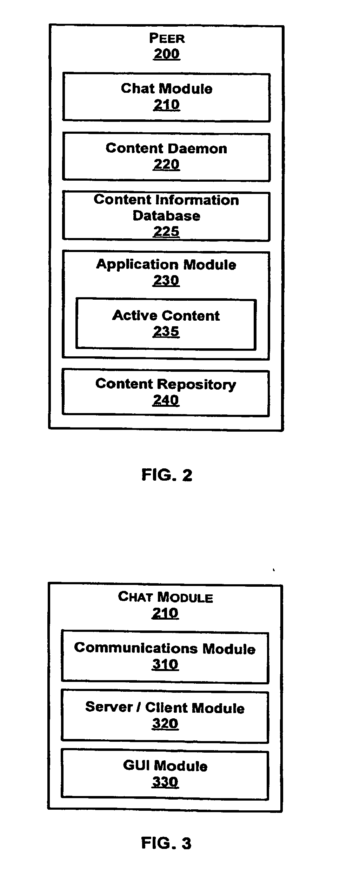

FIG. 2 is a block diagram illustrating a peer 200 according to one embodiment of the present invention. The peer 200 includes a chat module 210, an application module 230, and a content repository 240. The hardware portions of a peer (e.g., storage devices, memory, microprocessor, buses, etc.) are not illustrated, and can be of any conventional or equivalent design.

The chat module 210 sends and receives active content and identity-based activity to and from other chat modules. The chat module 210 connects to a centralized messenger service located on the network 145 to set-up and/or conduct communication with other peers. The centralized messenger service may be Apple Computer Inc.'s iChat™, America Online's AIM™, an instant messaging module or the like. Peers can communicate with each other, with their messages passing through the messenger service, or directly with each other independently of the centralized messenger server. The chat module 210 may periodically communicate with the centralized messenger service to update communication with other peers such as setting-up connections with new peers and changing communication addresses of existing peers. Although the present embodiment utilizes a chat module 210 to share active content and identity-based activity other embodiments may integrate such sharing into different peer-to-peer communications modules such as an FTP module or other file sharing application.

The content daemon tracks 220 active content and user activity by polling the application module 230. If there is active content of activity, the content daemon 220 collects related information, e.g., meta-data about a file in use or a URL of a user's online posting. In another embodiment, the content daemon 220 receives information sent automatically by the application module 230. In another embodiment, the content daemon 220 is configured to exclude certain active content and identity-based activity, such as confidential information, from sharing.

In one embodiment, the content daemon 220 is integrated into an operating system running on the peers. The operating system is for example, Mac OS X by Apple Computer, Inc. of Cupertino, CA or Windows XP by Microsoft Corp. of Redmond, WA. Integration includes software code of the operating system itself, a plug-in module that interoperates with the operating system, or any other background process that receives messages from the operating system related to active content and identity-based activity. The operating system notifies the content daemon module 220 of active application modules 230 and content and/or activities therein.

The content daemon 220 further comprises a content information database 225 that generates and stores information about recently activated content and identity-based activity shared with other peers. The content information database 225 comprises, for example, a table for each user of a peer that contains categories, and lists instances within each category. Content information may be meta-data about the content file such as its size, an auxiliary data file related to the data file such a unique identifier, related image file, content title, content source, or any other information directly or indirectly related to the content. The content information database 330 receives queries containing an identifier such as an MP3 ID tag received from, *e.g.,* the chat module 210 or the application module 230. In response, the content information database 220 makes matching information available to the chat module 210, such as the MP3 content title. The information can be displayed at the sender peer 110, sent to the recipient peer 120 for display, or sent to the content enhancement server 130.

The content information database 225 may also store activity information such as recent or ongoing online transactions. In one example, responsive to the content daemon 220 detecting a book or MP3 purchase, the content information database 225 may update a list of the five most recent books on MP3 purchases. In another example, the content daemon 220 records a URL containing a user's auction. Additionally, the content information database 225 uses an API for the auction service to obtain information such as an item's description or auction expiration time.

The unique identifier comprises an active content fingerprint such as a hash key or wavelet. The hash key can be determined from an algorithm implementing a mathematical transform on binary data such as SHA-1 or CRC32. The unique identifier may be used by the recipient peer 120 to retrieve locally stored active content information related to the file, or sent to the content enhancement server 130 to retrieve active content supplements as described below.

The application module 230 includes active content 235. The application module 230 may be application software, hardware, or a combination such as a media player, a web browser, a word processor, or the like. To activate the data file, the application module 230 opens at least a portion of the data file and progresses through the data file either sequentially or otherwise. For example, a media player loads a portion of an audio file into a buffer representing the next ten seconds of audio playback. Besides locally executed files, the application module 230 serves as a conduit to online activities. For example, a web browser loads a web page containing user activity.

The content repository 240 stores data files that are activated by the application module 230. The content repository 240 may be a hard disk, flash memory, random access memory, or any device capable of non-volatile or volatile storage of data files. The data files contain data in any useful format, such .mpg, .wma, .omg, .gif, .mp3, .doc, .txt, .pdf, or any format capable of execution by the application module 230. In one embodiment, the content repository 240 is networked to the sender peer 110 such as a personal digital assistant with data files connected to the peer via the Bluetooth wireless communications protocol.

FIG. 3 illustrates a block diagram of the chat module 210 according to an embodiment of the present invention. The chat module 210 comprises a communications module 310, a server/client module 320, a content information database 330, and a GUI module 340.

The communications module 310 provides a communications pathway for the chat module 210 to transmit messages, and to share active content and identity-based activity through the network 145. The communications module 310 logs-in to the centralized chat server and establishes point-to-point communication with other peers by exchanging network addresses such as IP addresses. The communications module 310 may further comprise a network interface, appropriate protocol software, an operating system or port control, a peer network software, or and application software.

The server/client module 320 sends active content and identity-based activity for output at the other peers, and receives the same. Additionally, the server/client module 320 streams active content to a recipient peer 120. The server/client module 320 comprises, for example, an FTP server, a desktop sharing server, an audio/video server, or any other device capable of sending and receiving active content and identity-based activity through a network.

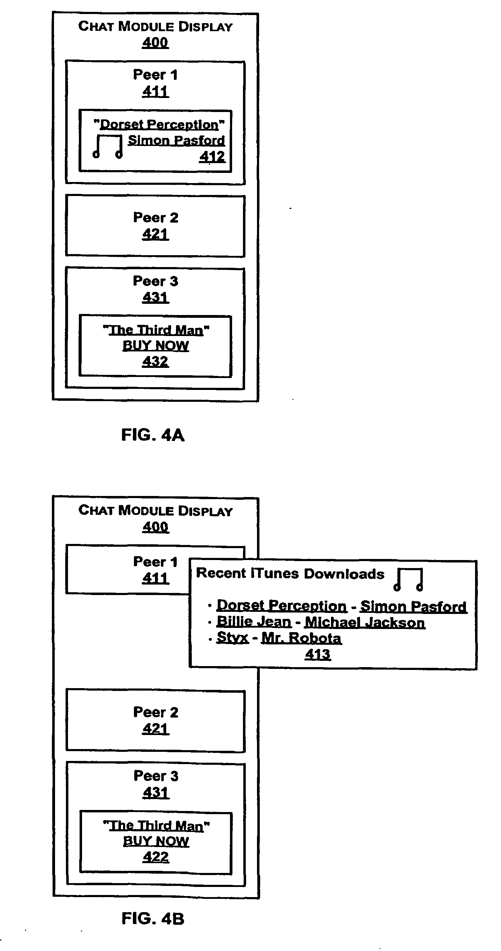

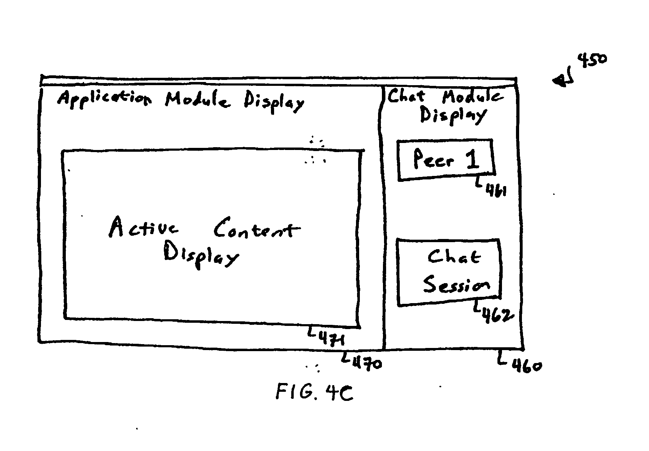

The GUI module 340 provides a user interface of the chat module 210 and receives user commands related to displayed information. In the recipient peer 120, the GUI module 340 integrates the information into the chat module's 210 user interface as discussed below in regards to FIG. 4. The GUI module 340 receives user commands to, for instance, initiate a stream or initiate a transaction. The GUI module 340 may include a graphical engine, an audio/video CODEC, a processor, an operating system, graphic software, and other graphics enhancing devices.

FIG. 4A is an illustration of a user interface displaying a recipient peer's chat module 400 with integrated active content information according to one embodiment of the present invention. One of ordinary skill of the art will recognize that FIGs. 4A-C are merely illustrative examples and that there are many variations within the scope of the invention. The chat module display 400 comprises contacts 411, 421, 431 which are other peers on the network and, if there is any, each contact's active content information 412, 422. The contacts are a list of peers, which may be personal contacts, co-workers, or any other peers on the network 145.

A music icon indicates that the user of Peer 1 is listening to a song, which in this example is "Dorset Perception" by Simon Pasford. In response to selecting the icon, the chat module 210 may initiate an active content stream, enable a purchase, retrieve content supplements, etc. In one embodiment, response to selecting a hyperlink associated with the song title or artist, a list of similar songs, or other songs by the artist is returned.

The representation of Peer 2 does not include information about active content at Peer 2. In one embodiment, Peer 2 does not send information about active content because, for example, there is no currently active content at Peer 2 or because Peer 2 has is not configured to share active content with the recipient peer 120. In another embodiment, the chat module 210 does not display received active content information because, for example, the recipient peer 120 is not capable of receiving an active content stream, or not capable of activating streamed content.

The representation of Peer 3 includes an icon indicating that the active content 432 at Peer 3 is a movie titled "The Third Man," and that this movie is available for purchase. In response to selecting the icon, the chat module 210 enables a transaction.

FIG. 4B is an illustration of a user interface displaying a recipient peer's chat module 400 with integrated identity-based activity according to one embodiment of the present invention. The identity-based activity of this example comprises recently downloaded songs from iTunes. In one embodiment, activating the song hyperlink initiates a transaction such as a purchase of the song from iTunes. In another embodiment, activating the artist hyperlink returns a list of other MP3s by the artist.

FIG. 4C is an illustration of a user interface 450 displaying a recipient peer's application module with an integrated chat module. The user interface includes an application module display 470 and a chat module display 460. The user interface may be rendered by a GUI to display in an application module 230.

The application module display 470 further includes an active content display 471 to output the content currently available to a peer. For example, the display can show active video content in response to that same content being displayed on the sender peer's 110 active content display.

The chat module display 460 further includes a representation of Peer 1 and a chat session 462. Peer 1 is preferably a peer having active content compatible with the application module 230. The chat session 462 is disposed within the user interface to allow access to messaging while viewing active content. Advantageously, the peer user need not toggle between application windows when messaging a peer about shared active content.

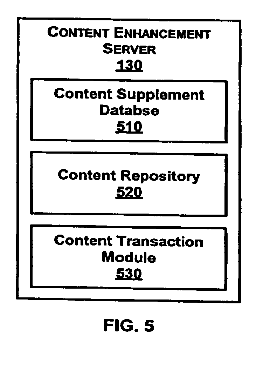

FIG. 5 is a block diagram illustrating the content enhancement server 130 according to an embodiment of the present invention. The content enhancement server 130 includes a content supplement database 520 and a content transaction module 530.

The content supplement database 520 queries file descriptions to provide the recipient peer 120 with data files related to content. The data files may contain information similar to that stored in the content information database 225 and the content repository 240, or more loosely related to the shared active content such as data files of advertisements. Accordingly, a query for a music artist may return a new book about the artist or their latest CD. The query may use a unique identifier such as a hash key if available. In one embodiment, the content supplement database 520 streams content to the recipient peer 120. In another embodiment, the stream is a preview. The content supplement database 520 and methods operating therein are described in further detail below.

The content transaction module 530 facilitates transactions with the recipient peer 120 such as content purchase. The content transaction module 530 includes a database of available products. Selected products are identified by a tag or unique identifier received from the recipient peer 120. The content transaction module 530 receives an order for the product and stores a resulting transaction ticket.

In another embodiment, the content transaction module 530 enables transactions between the recipient peer 120 and third-party retailers. The content transaction module 530 sends queries to several third-party databases according to the third party's application program interface. Based on the results, the content transaction module 530 generates a list of products with hyperlinks to third-party web sites containing the products. The content transaction module 530 also stores each third-party web site impression and click-through from the hyperlink list. The content transaction module 530 and methods operating therein are described in further detail below.

Advantageously, the recipient peer 120 is able to automatically access supplemental information about shared active content and is easily able to obtain a copy of content or a related product.

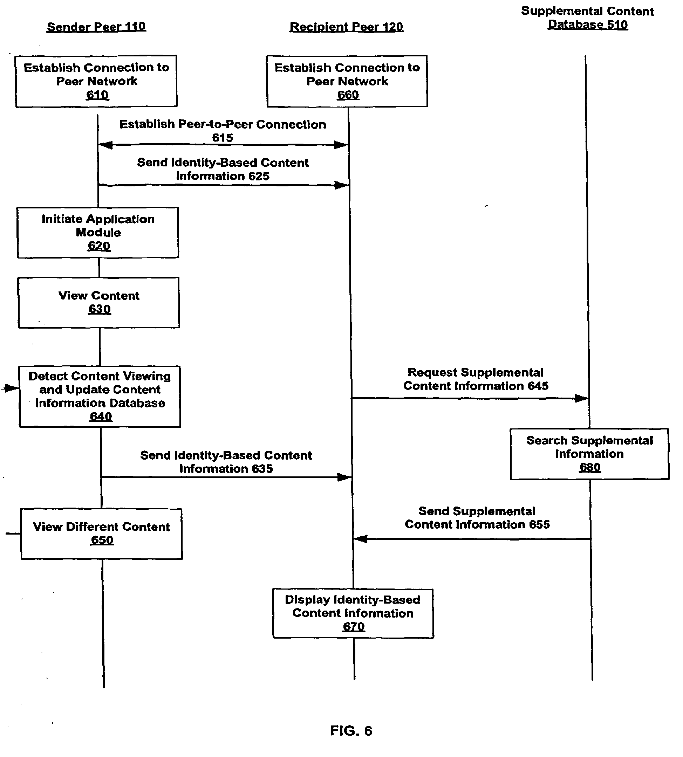

FIG. 6 is a sequence diagram illustrating a method of sharing identity-based activity in the system 100 according to an embodiment of the present invention. The sending and recipient peers 110, 120 independently establish 610, 660 connections to the peer network by presenting an authorized log-in and password to a log-in server.

Next, the sender and recipient peers 110, 120 establish 615 a peer-to-peer connection to enable direct or indirect communication. Each peer sends a list of contacts or other parameter to the log-in server for identifying preferred peers. The log-in server returns a list of logged-in contacts with network addresses for direct communication or other types of identification such as the contact name for indirect communication through the log-in server. The log-in server also notifies other relevant peers that new peers have joined the network 145. The sender peer 110 sends 625 a list of identity based content information from the content information database 225.

The sender peer 110 sends 625 content information to the recipient peer chat module 210 either directly or indirectly through the log-in server. The recipient peer 120 displays or otherwise output the content information to the contact. Additionally, the recipient peer 120 requests 645 supplemental information related to the content from the content enhancement server 130. To check the content enhancement server 130, the recipient peer 120 sends an identifier such as a tag or title as described herein.

The content supplement database 510 searches 680 its files using a query based on the identifier for the content. The query may be filtered by additional parameters such as only pictures or only advertisements. If a unique identifier of the content is available, such as a hash key, the query results are more determinative. Otherwise, the content supplement database 510 ranks the query results and sends 655 the supplemental content information to the recipient peer 120 for display. In one embodiment, the content supplement database 510 saves peer-specific queries to use as parameters in future queries.

In another embodiment, the content supplement database 510 searches third party databases by sending a query using the API of the outside database. Based on matching the queries to database descriptions, the content supplement database 510 determines which databases to search. The content supplement database 510 ranks the results and generates a list of hyperlinks corresponding to third party websites containing the results. The content supplement database 510 may additionally store hyperlink impressions or click-throughs from the list.

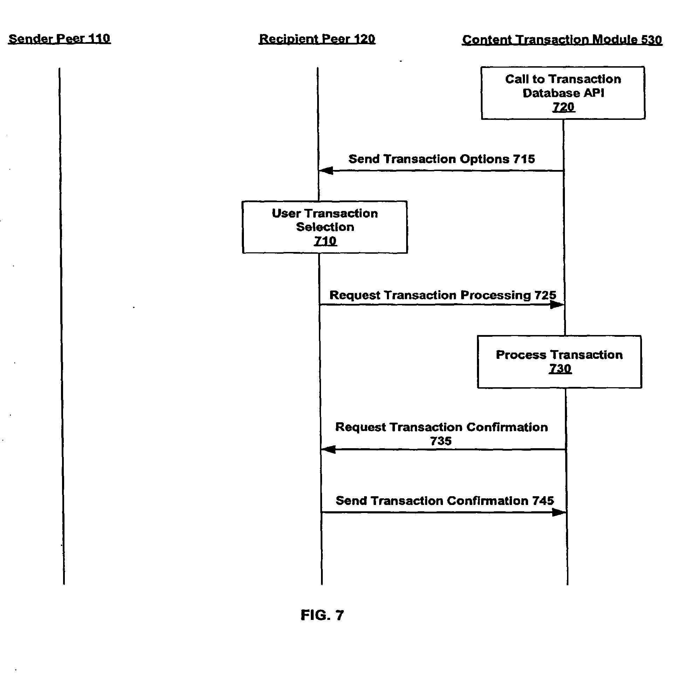

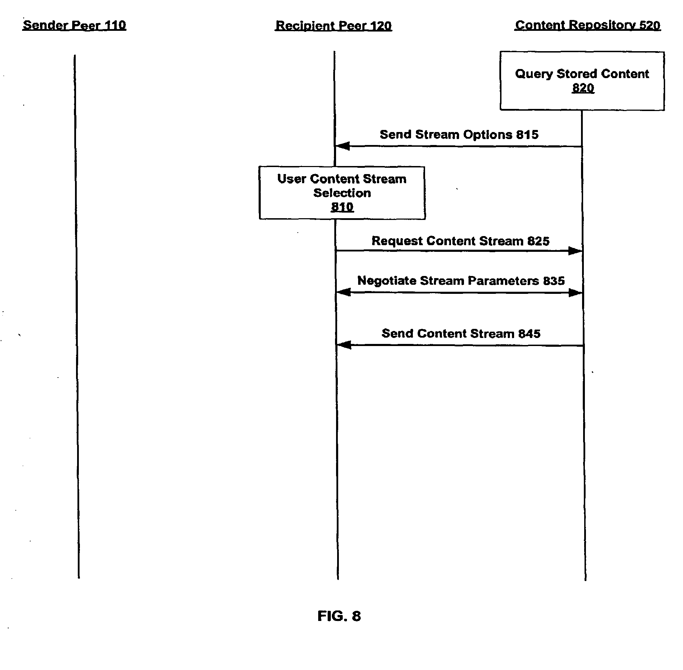

The recipient peer 120 displays 670 the active content and/or identity-based activity in its user interface. In one embodiment, the recipient peer 120 implements local preferences by running a local ranking of the received results or by filtering certain results. The recipient peer 120 user elects to request a stream of the content from the sender peer 110 or the content enhancement server 130 as discussed with respect to FIG. 8. The recipient peer 120 may alternatively request a transaction from the with the content transaction module 530 as discussed with respect to FIG 7.

The sender peer 110 also sends updates. After the initial identity based content is sent, the sender peer 110 initiates 620 the application module 230. In one embodiment, the application module 230 and the chat module 210 are integrated into a single application, so both modules are initiated at the same time (e.g., FIG. 4). The sending application module 230 activates 630 content from the content repository 240 by outputting a portion of the data file (e.g., playing back part of an audible e-book). The content daemon 220 detects 640 content viewing on the application module 230 and updates the content information database 225. The sender peer 110 sends 635 updated content information to the percipient peer 120. In response to the sender peer 110 changing 650 content in the application module 230, the sender peer 110 again sends 635 content information to the recipient peer 120.

In one embodiment, the content daemon 220 periodically polls the application module 230 for content information. In another embodiment, the application module 230 publishes its status to the content daemon 220. In yet another embodiment, the content daemon 220 automatically polls the activity server 140, which hosts online web sites such as eBay.com or Amazon.com by using an API and/or unique identifier. The web sites return a current status of a user's ongoing auction or recent book purchases. The API may be proprietary, on open standard, or queries that appear to the web sites to originate from a user.

FIG. 7 is a sequence diagram illustrating a method of completing a transaction concerning content according to an embodiment of the present invention. The content enhancement server 130 queries a database in the content transaction module 530 in response to receiving the request for supplemental content information 645 or otherwise. In the example of a purchase transaction, the database query returns a opportunity to purchase, for example, an MP3 or CD containing a song or a DVD containing a movie. The database query also returns related transaction options, such as an option to purchase clothing designed by a queried music artist. The content transaction module 530 ranks the query results and sends 715 a list of transaction opportunities to the recipient peer 120 for display. The results may be displayed as hyperlinks or objects in a java applet.

The recipient peer 120 requests 725 transaction processing responsive to a user selection 710. In one embodiment, the content transaction module 530 requests further information from the recipient peer 120 user, such as payment and shipping information. Once the transaction terms are completed, the content transaction module 530 requests 845 transaction confirmation to the user. The transaction is completed when the recipient peer 120 returns 745 a transaction confirmation to the content transaction module 520.

FIG. 8 is a sequence diagram illustrating a method of streaming content to the recipient peer 120 according to an embodiment of the present invention. The content repository 520 queries 820 stored content in response to receiving the request for supplemental information 645 or otherwise. The content repository 520 sends 815 stream options to the recipient peer in any format described herein. The recipient peer 120 requests 825 for a stream of content to the content repository 520 responsive to a user input 820.

Next, the content repository 520 and recipient peer 120 negotiate 835 stream parameters such as stream speed. Essentially, the sender peer's server/client module 320 and content repository's server/client module (not pictured) provide a direct communication link by exchanging port numbers. Additionally, factors may include local preferences, network traffic load, and bandwidth requirements of the content. The recipient peer 120 determines which application modules 230 are compatible with the file type and initiates an application module 230. In one embodiment, if the file type is compatible with several application modules 230, the recipient peer 120 presents the user with a choice of application modules 230 for activating the file.

The recipient peer 120 activates the content in the application module 230. The application module 230 may display or otherwise output the shared active content when a minimum amount of data has been received, buffer a certain amount of data, or wait until the entire file has been transferred.

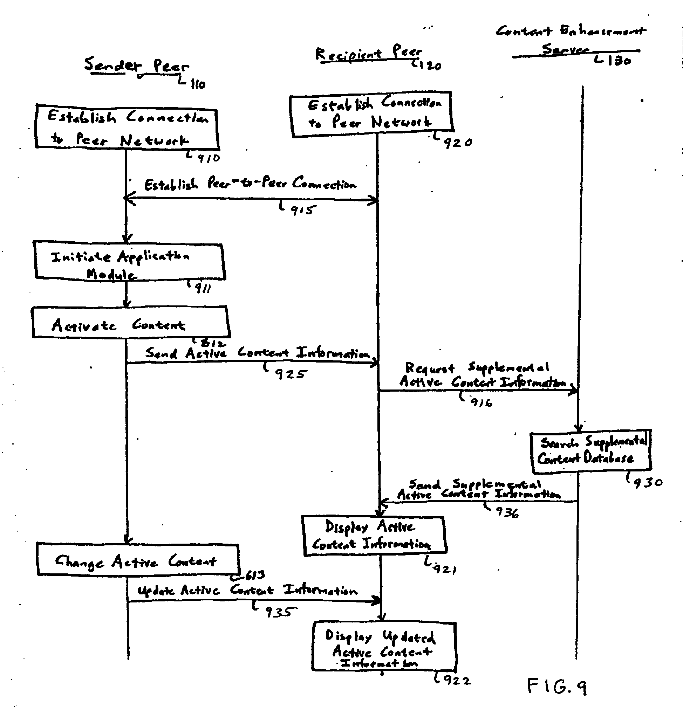

FIG. 9 is a sequence diagram illustrating a method of sharing active content in the system according to an embodiment of the present invention. The sending and recipient peers 110, 120 independently establish 910, 920 connections to the peer network by presenting an authorized log-in and password to a log-in server.

Next, the recipient and sender peers 110, 120 establish 915 a peer-to-peer connection to enable direct communication. Each peer sends a list of contacts or other parameter to the log-in server 510 for identifying preferred peers. The log-in 510 server returns a list of logged-in contacts with network addresses. The log-in server 510 also notifies other relevant peers that new peers have joined the network 145.

The sender peer 110 initiates 911 the application module 230. In one embodiment, the application module 230 and the chat module 210 are integrated into a single application, so both modules are initiated at the same time (e.g., FIG. 4C). The sending application module 230 activates 612 content from the content repository 240 by outputting a portion of the data file. The chat module 210 may have a daemon that detects the application module 230 running on the peer and periodically polls the application module 230 for active content information. In another embodiment, the application module 230 publishes its status to the daemon.

The sender peer 110 sends 925 active content information to the recipient peer 120 chat module 210. The recipient peer 120 may display or otherwise output the active content information, or request 916 supplemental information related to the active content from the content enhancement server 130. To check the content enhancement server 130, the recipient peer 120 sends an identifier such as a tag or title.

The content supplement database 520 searches 930 its files using a query based on the identifier for the shared active content. The query may be filtered by additional terms such as only pictures or only advertisements. If a unique identifier of the active content is available, such as a hash key, the query results are more determinative. Otherwise, the content supplement database 520 ranks the query results and sends 936 the supplemental active content information to the recipient peer 120 for display. In one embodiment, the content supplement database 520 saves peer-specific queries to use as parameters in future queries.

In another embodiment, the content supplement database 510 searches third party databases by sending a query using the application programming interface of the outside database. Based on matching the queries to database descriptions, the content enhancement database determines which databases to search. The content supplement database 510 ranks the results and generates a list of hyperlinks corresponding to third party websites containing the results. The content supplement database 510 may additionally store hyperlink impressions or click-throughs from the list.

The recipient peer 120 displays 921 the active content information in its user interface. In one embodiment, the recipient peer 120 may implement local preferences by running a local ranking of the received results or by filtering certain results. The peer may also elect to request a transaction from the with the content enhancement server 130 as discussed with respect to FIG. 8. The peer user may elect to request a stream of the shared active content from the sender peer 110 as discussed with respect to FIG. 8.

In response to the sender peer 110 changing 613 active content in the application module 230, the sender peer 110 sends 935 updated active content information to the recipient peer 120. The recipient peer 120 displays 922 updated active content information, or supplemental active content information in the chat module 210 user interface.

FIG. 8 is a sequence diagram illustrating a method of completing a transaction concerning shared active content according to an embodiment of the present invention. The recipient peer 120 sends 1015 a request for transaction information to the sender peer 110 responsive to user input 1020. Accordingly, the sender peer 110 sends 1025 a transaction identifier such as the tag used to retrieve information from the supplemental content repository 240 or other shared active content information.

The recipient peer 120 sends 1016 the identifier to the content enhancement server 130 to query a database in the content transaction database. In the example of a purchase transaction, the database query returns a opportunity to purchase, for example, an MP3 or CD containing a song or a DVD containing a movie. The database query may also send 1026 related transaction options such as an option to purchase clothing designed by a queried music artist. The content transaction database ranks the query results and sends a list of transaction opportunities to the recipient peer 120 for display. The results may be displayed as hyperlinks or objects in a java applet.

The recipient peer 120 sends 1036 a transaction selection such as a request to purchase a content source to the content transaction module 530 of the content enhancement server 130. In another embodiment, the content transaction module 530 requests further information from the recipient peer 120 user such as payment and shipping information.

Once the transaction terms are completed, the content transaction module 530 sends 1046 a request for a transaction confirmation to the user. The transaction is completed when the recipient peer 120 sends 1056 a transaction confirmation to the content transaction module 520.

FIG. 9 is a sequence diagram illustrating a method of streaming active content between the sender peer 110 and the recipient peer 120 according to an embodiment of the present invention. The recipient peer 120 sends 1115 a request for a stream of shared active content to the sender peer 110 responsive to a user input 1120 by the user of the recipient peer.

Next, the sender peer 110 and recipient peer 120 negotiate 1125 stream parameters such as stream speed. Essentially, the sender peer's server/client module 320 and recipient peer's server/client module 320 provide a direct communication link by exchanging port numbers for the application modules 230. Additionally, the peers may assess local preferences, network 145 traffic load, and bandwidth requirements of the shared active content.

The server/client module 320 in the sender peer 110 synchronously streams the shared active content to the recipient peer 120. The recipient peer 120 determines which application modules 230 are compatible with the file type and initiates an application module 230. In one embodiment, if the file type is compatible with several application modules 230, the recipient peer 120 presents the user with a choice of application modules 230 for activating the file.

The recipient peer 120 application module 230 activates the shared active content in the application module 230. The application module 230 may display or otherwise output the shared active content when a minimum amount of data has been received, buffer a certain amount of data, or wait until the entire file has been transferred.

The recipient peer 120 application module 230 sends shared active content information such as a change in display of the file, a change of shared active content, or termination of active content altogether.

## Claims

1. An apparatus for sharing current or recent activity specific to a user with at least one peer, comprising:
a content daemon to detect and store information about current or recent activity specific to the user from a plurality of applications used by the user for the current or recent activity; and
an instant messaging module communicatively coupled to the content daemon, the instant messaging module being adapted to send an indication of the current or recent activity specific to the user to at least one peer, the current or recent activity specific to a user being related to a user logged-in to the instant messaging module and including activity detected and stored prior to the user being logged-in to the instant messaging module.

2. The apparatus of claim 1 wherein current or recent activity specific to a user comprises content customized by the user that is accessible to at least one peer.

3. The apparatus of claim 2, wherein the customized content comprises a current online auction posted by the user.

4. The apparatus of claim 1, wherein current or recent activity specific to a user comprise instances of active content by a user logged-in to the instant messaging module.

5. The apparatus of claim 4, wherein active content comprises multimedia files played back in the apparatus.

6. The apparatus of claim 1, further comprises an application module to view identity-based content, and wherein the content daemon detects and stores current or recent activity specific to a user in the application module.

7. The apparatus of claim 1, wherein the content daemon detects and stores current or recent activity specific to a use by communicating with an activity server that hosts the current or recent activity specific to a user.

8. The apparatus of claim 1, wherein the content daemon detects and stores current or recent activity specific to a user after logging-in the user to the instant messaging module, and wherein the instant messaging module sends an update to the current or recent activity specific to a user.

9. The apparatus of claim 1, wherein the indication comprises a unique identifier related to the current or recent activity specific to a user, and wherein the instant messaging module further outputs a received indication of recent current or recent activity specific of another user.

10. The apparatus of claim 1, further comprising a content transaction module to enable a transaction related to the current or recent activity specific to a user.

11. A method of sharing current or recent activity specific to a user with a plurality of peers, comprising:
detecting current or recent activity specific to a user from a plurality of applications used by the user for the current or recent activity;
storing the current or recent activity specific to a user; and
sending an indication of current or recent activity specific to a user to at least one of the plurality of peers, the current or recent activity specific to a user related to a user logged-in to an instant messaging module and including activity detected and stored prior to the user being logged-in to the instant messaging module.

12. The method of claim 11, wherein current or recent activity specific to a user comprises content customized by the user that is accessible to the at least one peer.

13. The method of claim 12, wherein the customized content comprises a current online auction posted by the user.

14. The method of claim 11, wherein current or recent activity specific to a user comprises instances of active content by a user logged-in to the instant messaging module.

15. The method of claim 11, further comprising:
viewing identity-based content; and either
detecting and storing current or recent activity specific to a user; or
detecting and storing current or recent activity specific to a user independent of viewing current or recent activity specific to a user.

16. The method of claim 11, wherein the indication comprises a unique identifier related to the current or recent activity specific to a user, and wherein the instant messaging module further outputs a received indication of current or recent activity specific to another user.

17. The method of claim 11, further comprising enabling a transaction related to the current or recent activity specific to a user.

18. A computer program product comprising a plurality of computer executable instructions that when executed by a computer cause that computer to perform the method of any one of claims 11 to 17.
